# EUROPEAN PATENT SPECIFICATION

(11) **EP 3 190 442 B1**
(45) Date of publication and mention of the grant of the patent: **29.12.2021**
(21) Application number: 17159080.5
(22) Date of filing: 05.05.2011
(51) Int. Cl.: G02B 6/44

(54) **ADAPTER AND METHOD FOR FIXING AN OPTICAL FIBRE TO THE END OF A TUBE**
ADAPTER UND VERFAHREN ZUR BEFESTIGUNG EINER GLASFASER AN EINEM ROHRENDE
ADAPTATEUR ET PROCÉDÉ DE FIXATION D'UNE FIBRE OPTIQUE À LA FIN D'UN TUBE

(43) Date of publication of application: 12.07.2017
(62) Divisional of application: 11164939.8
(73) Proprietor: CommScope Connectivity Belgium BVBA, 3010 Kessel-Lo (BE)
(72) Inventor: Diepstraten, Patrick Jacques Ann, 3550 Heusden-Zolder (BE); Vastmans, Kristof, 3370 Boutersem (BE); Swinnen, Lucas, 3940 Hechtel-Eksel (BE); Eerlings, Andries, 1652 Alsemberg (Brussels) (BE)
(74) Representative: Grünecker Patent- und Rechtsanwälte PartG mbB

(56) References cited:
- GB-A- 2 450 806
- US-A- 4 615 031
- US-A- 5 903 693
- US-B1- 6 322 751

## Description

The present invention relates to an adapter and a method for fixing an optical fibre or a bundle of optical fibres, in particular an air-blown fibre, extending in a fibre direction with respect to an end section of a tube accommodating the fibre or the fibre bundle.

Optical fibres and the bundles of optical fibres are increasingly used in information technologies and applications thereof for transmitting digital signals such as data and other information. As the fibres themselves are rather long and thin and therefore prone to damage e.g. by snapping and cracking, they are often guided in tubes protecting them. These tubes may be rather short, i.e. they may have a length of centimetres or metres, but may also be very long, i.e. they may have a length of over one kilometre.

The fibres may come as units comprising a fibre element with several individual fibres. The fibres may be bundled to bundles comprising several fibres. Such a bundle or several bundles may be accommodated in a tube. The tubes again may be bundled within cables, wherein they form microducts.

Especially for long distances, there is a tendency that fibre bundles are blown into single tubes, forming a miniature duct system, by using an airflow which drives the fibre bundle, i.e. a free end of the fibre, to its destination. The destinations may be organisers, closures, boxes, transmitter modules, or multiplexers or other network elements, as well as a simple splice, where the ends of two fibres are connected to each other.

The optical fibres and bundles thereof have to be fixed with respect to the tubes accommodating them in order to eliminate any stresses which could act on any splices or the free end of the fibres jutting out of the respective tube. In other words, a strain relief for the fibres and/or the free ends of the tubes is desired.

According to the prior art, strain relief is achieved in that resins or adhesives, mostly chemical agents, are used to embed the fibre therein and/or to glue the fibre or a splice to a substrate. The substrate may be e.g. provided at a adapter or housing.

Disadvantages arising from the resins adhesives used for fixing the optical fibres according to the prior art are that the adhesives are often harmful to the environment and/or to the health of any fitter working with optical fibres. Moreover, the adhesives have a limited shelf-life and may therefore be costly because they have to be regularly replaced even though they are not used up. A disposal of the resins or adhesives again bears environmental risks and may be costly as expenses for recycling may arise therefrom. Above that, applying resins or adhesives may be time-consuming as their hardening has to be awaited before further processing and mounting is possible, which again may be costly.

A fiber optic cable fixing adapter according to the state of the art is known from US-A-4615031.

In order to facilitate the sealing and fixation of the fibre or bundle of fibres, the initially mentioned adapter comprises a tube holding section at a proximal end of the adapter, the tube holding section being adapted to fix the adapter to the tube, a fibre holding section, the fibre holding section providing a substantially tubular receptacle for receiving the fibre or bundle of fibres, the receptacle having a distal opening at a distal end of the adapter, and a sealing component, which is characterized in that the sealing component is plastically deformable for fixing the fibre or bundle of fibres to the adapter. In other words, the sealing component can be connected to an outer surface of the fibre and the fibre holding section, thereby fixing the fibre to the adapter with respect to the fibre direction and sealing the distal opening, wherein the sealing component is plastically deformed about the fibre or bundle of fibres.

The initially mentioned method includes the steps of fixing an adapter to the end section, inserting a fibre or bundle of fibres through the adapter, inserting the fibre through a sealing component, bringing the sealing component into sealing and holding engagement with the adapter and plastically deforming the sealing component about the fibre or bundle of fibres to bring the sealing component into sealing and holding engagement with the fibre or bundle of fibres.

The plastic deformability of the sealing component about the fibre ensures a tight seal between the adapter and the fibre, so that the opening at the distal end is sealed against the environment. Further, the deformability allows to increase the contact between the fibre holding section and the sealing component on the one hand and the sealing component and the fibre on the other. Thus, the fibre is held more strongly by the fibre holding section. For example, the plastically deformable sealing component can be connected to an outer surface of the fibre and the fibre holding section, thereby fixing the fibre or bundle of fibres to the adapter with respect to the fibre direction and sealing the distal opening, by plastically deforming the sealing component about the fibre.

The plastic deformability of the sealing material about the tube has the further advantage that any thermoset materials, epoxy resins or chemical agents for being applied to the fibre surface may be omitted. In other words, the fibre or bundle of fibres can be affixed essentially without the application of any thermoset materials, epoxy resins or chemical agents. The plastic deformability allows to result in a force which presses the sealing component against the surface of the fibre. By omitting the thermoset materials, epoxy resins or chemical agents, on the one hand, the environmental and health impacts arising from optical fibre installation are reduced. On the other hand, installation times may be reduced because any times for hardening the thermoset materials, epoxy resins or chemical agents are omitted. The fibre or bundle of fibres may simply be mechanically connected to the tube and may be immobilised with respect to the tube at least in an axial or longitudinal direction, with the help of the adapter.

It is the object of the invention to provide a solution that facilitates the sealing and fixation of the fibre or bundle of fibres.

This object is achieved with the adapter according to claim 1 and the method according to claim 15.

The above-mentioned solutions according to the present invention may be combined in any way with any one of the following advantageous embodiments of the present invention respectively and thus further improved.

According to a first improvement, the fibre holding section is, at least partially, plastically deformed about the fibre or bundle of fibres. Preferably, the region where the fibre holding section is plastically deformed corresponds to the region where the sealing component is affixed to the fibre holding section. In particular, the plastic deformation results in a decrease of the cross-sectional area of the receptacle, so that the fibre holding section approaches the fibre and the sealing component is pressed upon the fibre or bundle of fibres. The deformation may be achieved by crimping the fibre holding section and thus simultaneously deforming the sealing component during the crimping process.

Alternatively or additionally, the plastic deformation of the sealing component may be effected by applying thermal energy, which leads to a shrinking of the sealing component and/or the fibre holding section. The plastic deformation of the fibre holding section increases the bonding strength of the sealing component both on the interface between the fibre holding section and the sealing component, and between the sealing component and the fibre or bundle of fibres.

The plastic deformation of the sealing component and/or the fibre holding section further ensures that the fibre may be easily inserted into the fibre holding section even if the sealing component has been applied to the fibre holding section before the insertion of the fibre or the bun-die of fibres, e.g. if the adapter is provided with the sealing component pre-mounted. Thus, the sealing component may have a larger inner diameter prior to the deformation thus allowing the fibre or the bundle of fibres to be threaded.

As a sealing component, a material which is plastically deformable even in the hardened state is preferred, so that the adapter has a longer shelf life with the sealing component being preinstalled. A particularly suitable material may be mastic. The sealing component may be of a material that is activated by the plastic deformation, e.g. in that during the plastic deformation, the surface of the sealing component facing the fibre breaks up so that sticky material from within the sealing component may reach and bond with or contact the surface of the fibre or bundle of fibres.

The sealing component may be received within the fibre holding section to establish a chemical and/or mechanical bond between an outer surface of the fibre on the one hand and an inner surface of the fibre holding section or its receptacle, respectively, on the other hand. Such a configuration is preferred if the sealing component comprises a glue material, such as mastic.

The sealing component may also additionally or alternatively establish a chemical and/or mechanical bond between an outer surface of the fibre holding section and the fibre or bundle of fibres. In this case, the sealing component may be a preferably flexible and/or elastically widenable tubular element which is put on the fibre holding section. As such a tube, a heat shrink tube may be preferred, which is then plastically deformed by applying heat.

To improve the fixation of the sealing component with respect to the fibre holding section, at least one fixing element facing the sealing component and adapted to be positively locked to the sealing component may be provided. Such an at least one fixing element may e.g. be provided as preferably circumferential ribs extending substantially perpendicular to the fibre direction. The fixing elements may be provided on the outside of the fibre holding section, whichever position is needed to engage with the sealing component.

In order to increase the bonding strength between the fibre and the fibre holding section and thus to increase the fixation of the fibre relative to the adapter, the sealing component is preferably continuously engaged along a specified length in the fibre direction with both the fibre and the fibre holding section. If the sealing component is pre-mounted to the adapter, it may impede the insertion of the fibre or bundle of fibres through the fibre holding section. Thus, the length, along which the sealing component extends facing the fibre or bundle of fibres, should be limited to 60 mm, preferably to 30 mm.

The tube holding section at the distal end may, according to another embodiment, be provided with a connecting element which is adapted to mesh or engage with a wall of the tube. By this, the fixation of the tube holding section and thus the adapter, against the tube is enforced. The connection elements may e.g. comprise a cutting screw-thread and/or ribs which are adapted to cut and/or press into the material of the tube from the inside and/or outside of the tube. It is preferred, however, that the connecting elements act upon the outside of the tube, so that the whole inner diameter of the tube remains available for inserting the fibre or bundle of fibres.

If the tube holding section is adapted to engage the inner part of the tube, it is preferred that the tube holding section has an outer diameter which exceeds an inner diameter of the tube. This ensures a tight fit between the tube holding section and the tube. Otherwise, the tube holding section may have an inner diameter, which is less than an outer diameter of the tube.

In order to seal the receptacle of the adapter against the environment also on the proximal end, so that no open gaps remain between the tube and the adapter, a sealing element is provided at the proximal end. The sealing element may be adapted to be sealingly arranged between the tube and the adapter so that an opening of the receptacle at the proximal end is sealed. The sealing element may, in particular, be a ring made of elastic material, such as rubber or rubberlike material.

Optical fibre tubes provided by different manufacturers often have different dimensions and therefore different diameters. Hence, different adapters would have to be provided for each one of the different tubes. The different adapters require different tools for handling a multitude of different tubes that have to be kept ready when working with optical fibres and tubes. Keeping a multitude of tools at hand in order to work with different adapters is cumbersome and again costly. This problem may be avoided if the adapter according to the invention is used. For example, a kit may be used that comprises a plurality of adapters. The adapters have different tube holding sections adapted to be connected to tubes of different diameters. In order to provide an identical mechanical interface at the fibre end side, the fibre holding section and/or the distal end of the different adapters may be identical.

According to one embodiment, the tube holding section may be provided with a connecting section for connecting the tube thereto. The connecting section may be a separate part which can be exchanged with a different connecting section adapted to be fixed on a tube of different diameter. Hence, adapters may be provided which have identical outer dimensions and only differ in the respective connecting sections. In this case, a kit may comprise a single adapter and a variety of connecting sections. The different connecting sections may be adapted to suit different tubes. This enables a tool for assembling the adapter to be provided which is adapted to a certain shape and certain dimensions of the tube holding section, the reduction section and/or the fibre holding section, i.e. an outer shape, contour, and/or dimension of the adapter without the need of being adapted to different connecting sections which in turn may be designed as required by different types of tubes.

The connecting section may comprise a connecting element which may be adapted to mesh with the tube. The tube may thereby be easily attached to the tube holding section via the connecting element. Letting the connecting element mesh and/or interleave with the tube is an easy to apply mechanical way to fasten the tube to the adapter in a positive fit, force fit and/or friction fit.

Connecting the adapter and the tube may be further facilitated in that the connecting element comprises or is formed as a cutting screw-thread. This enables the adapter to be screwed onto the tube. The connecting section may protrude from the tube holding section and may have an outer diameter which exceeds an inner diameter of the tube. This enables the tube to be pressed onto the adapter in order to enhance a force fit and/or friction fit between the tube and the adapter.

Using a single tool for a multitude of different adapters may be further facilitated in that an overall length of the adapter may be at least 20 millimetres, preferably between 20 and 30 millimetres. For example, the overall length may be essentially equal to 23 millimetres or may be adapted such that it suits an interface of a tool. The interface may have a length of at least 20 millimetres, preferably between 20 and 30 millimetres, or essentially 23 millimetres for example.

According to another embodiment, the adapter may comprise a bushing as a connecting section. The bushing may have an inner diameter which is smaller or at least equal to an inner diameter of the tube holding section. Thereby, in case the tube holding section provides a receptacle into which the tube is to be inserted, the inner diameter of the connecting section which should encompass the tube may be easily fitted to an outer diameter of the tube or of different tubes.

An inner circumference of the bushing may be provided with at least one fixing element which may be adapted to mesh with an outer wall of the tube. Thereby, the bushing may be easily mechanically connected to the tube. The fixing element may enable to lock the bushing onto the tube in a positive fit, force fit and/or friction fit manner. Mounting the bushing to the tube may be further facilitated in that the at least one fixing element is formed as a cutter knife which extends essentially in parallel to a longitudinal direction of the fibre fixation assembly. The cutter knife may cut into the tube when the bushing is pressed onto the tube. Thereby, the bushing and the tube may be easily and securely brought into engagement with each other.

Another embodiment relates to a tube holding section having an outer diameter, a fibre holding section having an outer diameter, and a reduction section which connects the tube holding section to the fibre holding section, wherein the outer diameter of the tube holding section exceeds the outer diameter of the fibre holding section and the reduction section reduces the outer diameter of the tube holding section to the outer diameter of the fibre holding section, and wherein the tube holding section, the reduction section, and the fibre holding section have a combined length. A length-to-diameter-ratio between the combined length and the outer diameter of the tube holding section may be at least 6, preferably between 6 and 8. The length-to-diameter-ratio according to this embodiment allows for using existing tools currently used in the field of optical fibre handling for different types of adapters which have in common the same length-to-diameter-ratio. Optimally, a single tool may be provided for handling different adapters according to the present invention, which may be adapted to hold or fix a different type of tube each.

Further, the following examples, which however do not define the scope of protection, comprise further possible features of the adapter and method for fixing an optical cable or bundle:
For example, an adapter for fixing an optical fibre or bundle of optical fibres, with respect to an end section of a tube accommodating the fibre or fibre bundle, may comprise: a tube holding section at a proximal end of the adapter, the tube holding section being adapted to fix the adapter to the tube,
a fibre holding section providing a substantially tubular receptacle for receiving the fibre or bundle of fibres, the receptacle having a distal opening at a distal end of the adapter,
and a sealing component, wherein the sealing component is plastically deformable for fixing the fibre or bundle of fibres to the adapter.

In an advantageous embodiment of such an adapter, the fibre holding section is adapted to be at least partially, plastically deformed about the fibre or bundle of fibres.

In a further advantageous embodiment of such an adapter, the sealing component comprises heatshrinkable tubing.

In a further advantageous embodiment of such an adapter, the distal end of the fibre holding section is received within the sealing component.

According to a further advantageous embodiment of such an adapter, the sealing component comprises a glue material.

In a further advantageous embodiment of such an adapter, the fibre holding section comprises at least one fixing element facing the sealing component and adapted to be positively locked to the sealing component.

In a further advantageous embodiment of such an adapter, a diameter of a part of the fibre holding section, the part being engaged by the sealing component, does not exceed five times a diameter of the fibre or bundle of fibres.

According to a further advantageous embodiment of such an adapter, a length, over which the sealing component is adapted to be engaged to the fibre or bundle of fibres is at least 10 times a diameter of the fibre or bundle of fibres.

Advantageously, the tube holding section can be provided with a connecting element, the connecting element being adapted to mesh with a wall of the tube.

According to a further advantageous embodiment of such an adapter, the tube holding section has an outer diameter which exceeds an inner diameter of the tube.

In a further advantageous embodiment of such an adapter, a reduction section is arranged between the tube holding section and the fibre holding section, the reduction section having an outer shape that tapers towards the fibre holding section.

In a further advantageous embodiment of such an adapter, the tube holding section comprises an inner circumference of the bushing is provided with at least one fixing element which is adapted to mesh with an outer wall of the tube.

According to a particularly advantageous embodiment of such an adapter, the at least one fixing element is formed as a cutter knife which extends essentially in parallel to the fibre direction of the fixing arrangement.

In a further advantageous embodiment of such an adapter, a sealing element is provided at the proximal end, the sealing element being adapted to be sealingly arranged between the tube and the adapter.

A method for fixing an optical fibre or bundle of fibres extending in a fibre direction with respect to an end section of a tube accommodating the fibre or bundle of fibres, the method including the steps of: fixing an adapter to the end section, inserting a fibre or bundle of optical fibres through the adapter, inserting the fibre or bundle of optical fibres through a sealing component, bringing the sealing component into sealing and holding engagement with the adapter, and plastically deforming the sealing component about the fibre or bundle of optical fibres to bring the sealing component into sealing and holding engagement with the fibre or bundle of fibres.

The invention will be described in more detail by way of example hereinafter with reference to the accompanying drawings which illustrate advantageous embodiments. The described embodiments are only possible configurations in which the individual features may however, as described above, be implemented independently of each other or be omitted. Corresponding elements illustrated in the drawings are provided with the same reference signs. Parts of the description relating to the same elements in different drawings are omitted.

In the drawings:
- Fig. 1: is a schematic perspective view of a fibre fixation assembly according to an embodiment of the present invention fixing an optical fibre or a bundle of optical fibres with respect to an optical fibre tube;
- Fig. 2: is a schematic perspective cross-sectional view of the fibre fixation assembly, the optical fibre or the bundle of optical fibres and the optical fibre tube shown in Fig. 1;
- Fig. 3a: is a schematic side view of the fibre fixation assembly, the optical fibre or the bundle of optical fibres and the optical fibre tube shown in Figs. 1 and 2;
- Fig. 3b: is schematic front view of the fibre fixation assembly and the optical fibre or the bundle of optical fibres shown in Fig 3a;
- Fig. 4a: is schematic cross-sectional view of the fibre fixation assembly, the optical fibre or the bundle of optical fibres and the optical fibre tube along the cross-sectional line A-A depicted in Fig. 3a;
- Fig. 4b: is a schematic rear view of the cross-sectional illustration of the fibre fixation assembly, the optical fibre or the bundle of optical fibres and the optical fibre tube shown in Fig. 4a;
- Fig. 4c: is a schematic cross-sectional view of the fibre fixation assembly along the cross-sectional line B-B depicted in Fig. 3a;
- Fig, 5: is a schematic perspective view of another embodiment of a fibre fixation assembly according to the present invention, an optical fibre or the bundle of optical fibres and an optical fibre tube;
- Fig. 6: is a schematic side view of the fibre fixation assembly, the optical fibre or the bundle of optical fibres and the optical fibre tube shown in Fig. 5;
- Fig. 7: is a schematic cross-sectional view of the fibre fixation assembly, the optical fibre or the bundle of optical fibres and the optical fibre tube along the cross-sectional line C-C depicted in Fig. 6.

In the following, a fibre fixation assembly 1 for immobilising an optical fibre or bundle of fibres 100 with respect to an optical fibre tube 200 according to the present invention, a kit for the fibre fixation assembly 1 and a method for fixing the fibre or bundle of fibres 100 with respect to the tube 200 are explained with reference to the respective embodiments thereof shown in the figures.

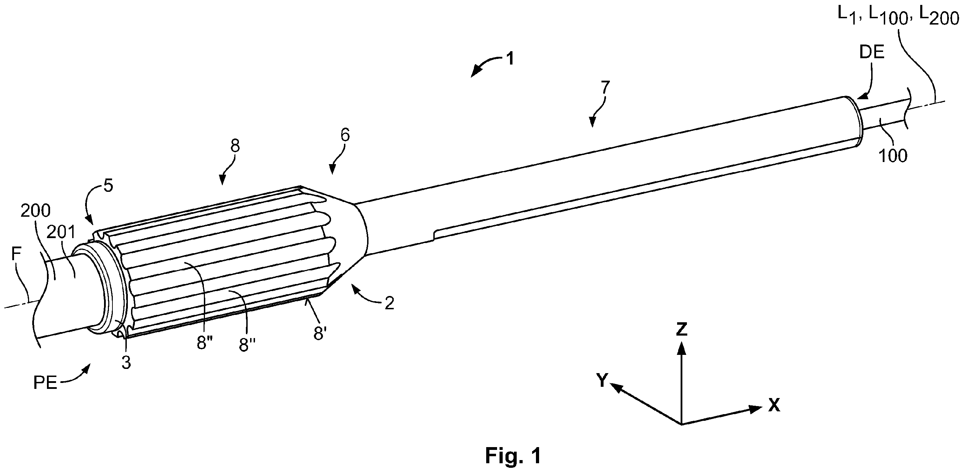

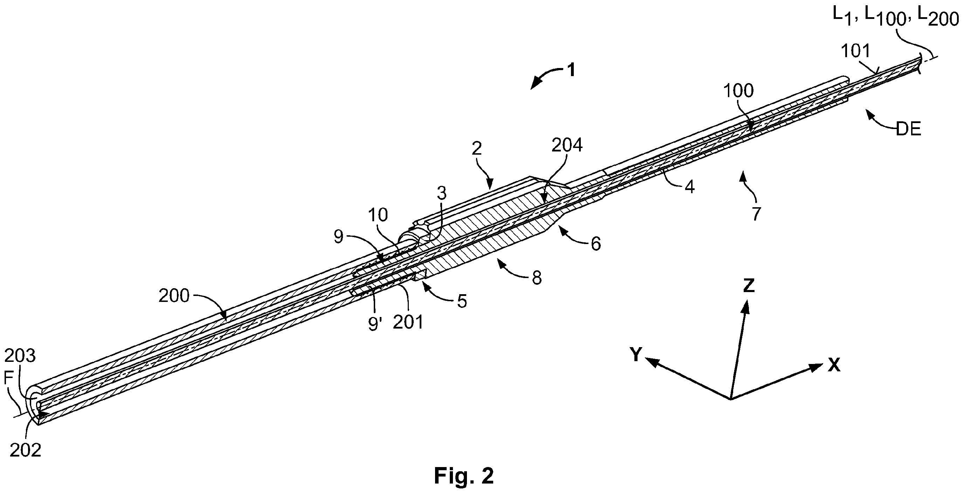

Fig. 1 is a schematic perspective view of the fibre fixation assembly 1, the optical fibre or bundle of fibres 100 and the optical fibre tube 200. The fibre fixation assembly 1 comprises an adapter 2 forming a housing as well as a sealing for the fibre or bundle of fibres 100. A sealing element 3 of the adapter 2 may sealingly abut an end section or free end 201 of the tube 200. Further, the fibre fixation assembly 1 comprises a sealing element 4 (Fig. 2) for sealing and fixing the fibre or bundle of fibres 100 with respect to the adapter 2.

The adapter 2 comprises a tube holding section 5 at a proximal end PE of the adapter, a reduction section 6, and a fibre holding section 7 at a distal end DE. The tube holding section 5 is connected to the fibre holding section 7 via the reduction section 6. The reduction section 6 may have a frustoconical shape to provide a transition between the tube holding section 5 and the fibre holding section 7, wherein the tube holding section 5 has a larger diameter than the fibre holding section 7.

In order to facilitate handling the fibre fixation assembly 1, a handling section 8 may provide a handling surface 8' at its perimeter. The handling section 8' may comprise longitudinal ribs at a peripheral surface. The handling section 8 may further have an enlarged diameter with respect to the tube holding section 5 and the fibre holding section 7 to improve ergonomy. It is arranged preferably between the tube holding section 5 and the reduction section 6.

Longitudinal axes L₁, L₁₀₀ and L₂₀₀ of the fibre fixation assembly 1, the fibre or bundle of fibres 100 and the tube 200, respectively, extend essentially in parallel to a longitudinal direction X of the fibre fixation assembly 1. A lateral direction Y of the fibre fixation assembly 1 extends perpendicularly to the longitudinal direction. A height direction Z of the fibre fixation assembly extends perpendicularly to the longitudinal direction X and the lateral direction Y. A fibre direction F of the fibre or bundle of fibres 100 extends parallel to the longitudinal direction X in the region of the fixing arrangement 1 and preferably coincides with the longitudinal axes L₁, L₁₀₀ and L₂₀₀.. The fibre fixation assembly 1, the fibre or bundle of fibres 100 and the tube 200 are arranged coaxially e.g. with respect to the fibre direction F.

Fig. 2 is a schematic cross-sectional view of the fibre fixation assembly 1, the optical fibre or bundle of fibres 100 and the tube 200 along their respective longitudinal axes L₁, L₁₀₀ and L₂₀₀. The fibre or bundle of fibres 100 is guided within an inner space 202 of the tube 200. At the end section 201, the tube 200 is connected to the adapter 2 via the holding section 5 of the adapter 2 extending therefrom against the longitudinal direction X. For this, the tube holding section 5 may comprise e.g. a connecting section 9 providing a tube-like protrusion or shape that extends in a direction along the fibre direction pointing away from the distal end DE or the fibre holding section 7, respectively.

The connecting section 9 may be provided with at least one connecting element 10. The at least one connecting element 10 is adapted to establish an axial immobilization of the tube 200 and the adapter 2 relative to each other. The connecting element 10 may provide a positive lock to the tube 200. As shown in Fig. 2 it may be formed as a cutting screw-thread 10. The cutting screw-thread cuts into an inner wall 203 of the tube 200. Thereby, the connecting section 9 meshes with the tube 200 such that both overlap in the longitudinal direction X.

The sealing element 3 having e.g. the form of a sealing ring encloses the connecting section 9 and is seated between the end section 201 of the tube and the remaining adapter 2. Thereby, the sealing element 3 seals up a gap between the tube 200 and the adapter 2 in order to prevent any harmful substances from entering or coming out of the tube. An inner space or receptacle 204 of the adapter, in which the fibre is accommodated, is thus closed at the proximal end of the adapter 2 against the environment. At the distal den DE, the receptacle 204 terminates in an opening 205.

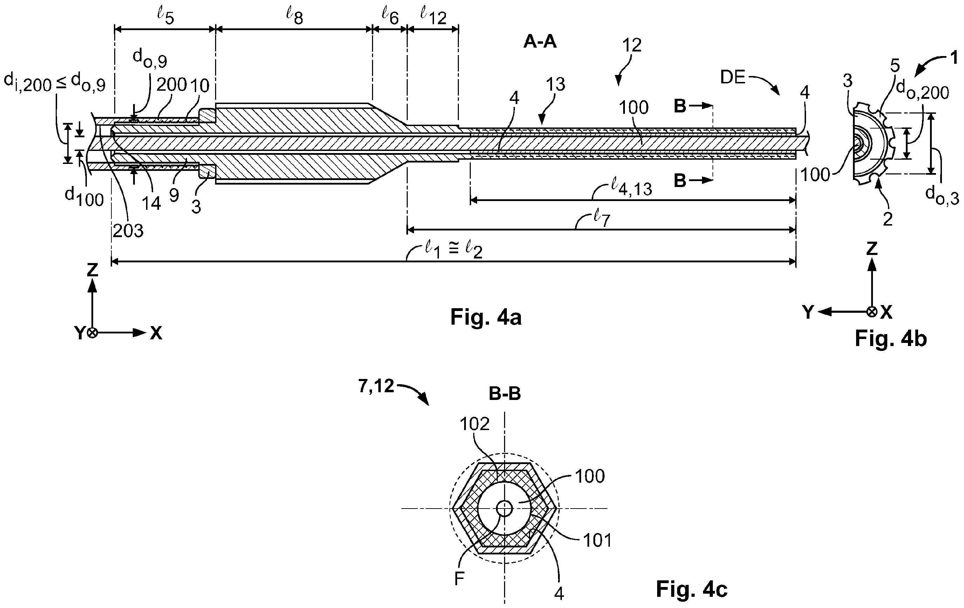

When entering the connecting section 9, the fibre or bundle of fibres 100 is guided within the receptacle 204 of the fibre fixation assembly 1. The receptacle 204 essentially has a constant diameter d_{i,11} from the proximal end PE to the distal end DE. An outer diameter d_{o,9} (Fig. 4a) of the connecting section may be smaller than an outer diameter d_{o,5} of the tube holding section 5. At the reduction section 6, the outer diameter d_{o,8} of the handling section 8 tapers to the smaller outer diameter d_{o,7} of the fibre holding section 7.

As shown in Fig. 1, the sealing component 4 may be located in the receptacle 204 and extend essentially along the fibre holding section 7 up or close to the opening 205. The sealing component 4 may be a plastically deformable glue such as mastic. The sealing component 4 seals the receptacle 204 of the adapter 2 against the outer environment of the adapter 2. The sealing component 4 is plastically deformed about the fibre or bundle of fibres 100 and therefore tightly engages an outer surface 101 of the fibre or bundle of fibres 100. Additionally, the sealing component provides mechanical stability in that it provides a strain relief and supports forces acting on the fibre in parallel to the longitudinal direction X. For this, the sealing component 4 is connected to an outer surface 101 over a specified length I₄ of about 10 mm to 60 mm, preferably close to 30 mm.

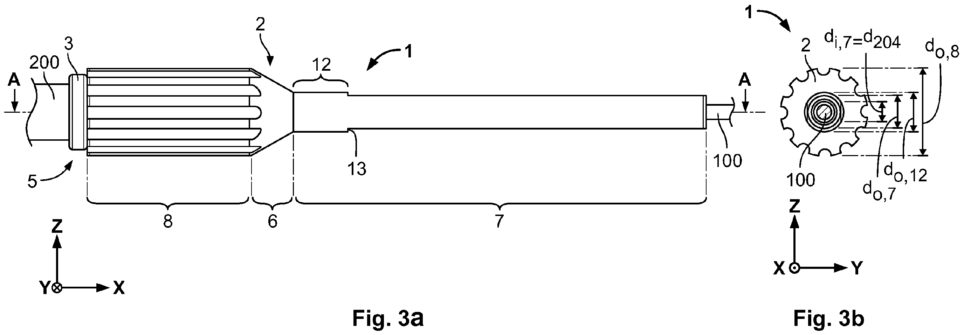

Fig. 3a is schematic side view of the fibre fixation assembly 1, the fibre or bundle of fibres 100 and the tube 200. As can be seen, the fibre holding section 7 is provided with a shaft portion 12. In the shaft portion 12, the fibre holding section 7 is enforced by having an increased wall thickness as compared to the remaining fibre holding section 7. Thus, any forces as well as torsional and turning movements acting between the fibre holding section 7 and the reduction section 6 may be transferred therebetween safely without damaging the adapter 2. As an additional effect, the diameter change between the shaft portion 12 and the rest of the fibre holding section 7 provides an edge on which a tool (not shown) may be supported for example.

Fig. 3b is a schematic front view of the fibre fixation assembly 1 and the fibre or bundle of fibres 100. As can be seen, the fibre holding section 7 has an inner diameter d_{I,7} and an outer diameter d_{O,7}. The shaft portion 12 has an outer diameter d_{O,12}. The handling section 8 has an outer diameter d_{O,8}.

Fig. 4a is schematic cross-sectional view of the fibre fixation assembly 1, the fibre or bundle of fibres 100 and the tube 200 along the cross-sectional line A-A depicted in Fig. 3a. Here it becomes apparent that the connecting elements 10 are in mesh with the inner wall 203 of the tube 200. Hence, an inner diameter d_{I,200} of the tube 200 is smaller or at a maximum equals an outer diameter d_{O,9} of the connecting section 9. A diameter d₁₀₀ of the fibre or bundle of fibres 100 is smaller than a diameter d₂₀₄ of the receptacle 204. The diameter d₂₀₄ is preferably equal to the inner diameter d_{I,7} of the fibre holding section 7. In order to prevent the fibre from cracking or kinking when entering the adapter 2 at the connecting section 9, the connecting section 9 is provided with a bevel 14, pointing to the tube 200, i.e. away from the distal end DE.

A length I₅ of the fibre tube holding section 5, a length I₈ of the handling section 8, a length I₆ of the reduction section 6 and a length I₇ of the fibre holding section essentially all measured in parallel to the length direction X add up to an overall length I₂ of the adapter 2 which essentially equals an overall length I₁ of the fibre fixation assembly 1. The shaft portion 12 has as a length I₁₂ also measured essentially in parallel to the length direction X. A length I₄ of the portion of the fibre holding section 7 where the compound 4 is effective may nearly have a length I₇ of the fibre holding section 7, but may also be smaller or exceed the length I₇. A sufficiently long length I₄ of the sealing component 4 measured essentially in parallel to the length direction X provides a good sealing, support and strain relief of the fibre or bundle of fibres 100 within the fibre holding section 7. Thereby, the fibre or bundle of fibres 100 and the fibre holding section 7 may act jointly as a stable structure. This is especially the case, when the fibre holding section 7 has a tubular shape as shown herein.

Fig. 4b is a schematic rear view of the fibre fixation assembly 1 and the tube 200 encompassing the fibre or bundle of fibres 100. As can be seen, an outer diameter d_{O,200} of the tube 200 is smaller than an outer diameter d_{O,3} of the sealing element 3 which is in turn slightly smaller than the outer diameter d_{O,8} of the handling section 8. Thereby, the sealing element 3 reliably blocks the entry or exit of water and gas into or out of the tube 200 and the receptacle 204.

As shown in Fig. 4a, the fibre holding section 7 comprises a section 13, which is plastically deformed about the fibre or bundle of fibres 100. The deformed section 13 is located within the shaft section 12 and preferably continuously extends over a specified length I₁₃. As shown in Fig 4a, the length and location of the deformed section 13 correspond to the extent and location of the sealing component 4.

Fig. 4c schematically shows the cross-section of the deformed section indicated by cross-sectional line B-B in Fig. 4a.

In Fig. 4c, the shape of the fibre holding section 7 or the shaft section 12 prior to the deformation is indicated by a dash-dotted line. By the plastic deformation, which may be effected by a crimping process, the fibre holding section is deformed, such that the cross-sectional area 102 in a plane perpendicular to the fibre direction F is reduced. The sealing component 4, which is located between the fibre or bundle of fibres 100 and the fibre holding section 7, is, at least in parts of the cross-sectional area, compressed and pressed against the outer surface 101 of the fibre or bundle of fibres 100 thereby establishing a strong sealing and fixational connection between the sealing component 4 and the fibre or bundle of fibres 100. In this embodiment, the plastic deformation of the sealing component 4 is effected and supported by the plastic deformation of the fibre holding section 7 or the shaft section 12, respectively.

Further, by compressing the sealing component 4 at least in parts of the cross-sectional area, the sealing component 4 is forced to flow into regions, where the compression is weaker.

The hexagonal shape of the fibre holding section 7 after the plastic deformation is given only by way of example. Other shapes are of course possible, such as polygonal shapes or rounded shapes, such as elliptical or rounded polygons.

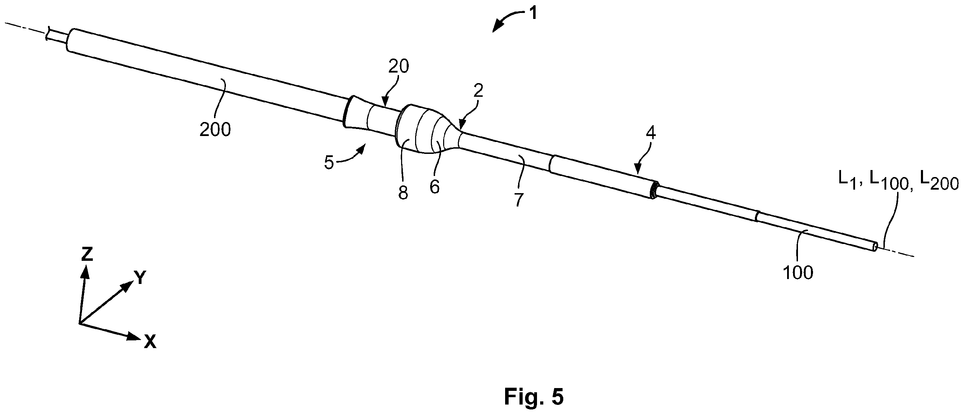

Fig. 5 shows a schematic perspective view of the fibre fixation assembly 1 according to another embodiment of the present invention with the fibre or bundle of fibres 100 and the tube 200 immobilized with respect to another thereby. The fibre fixation assembly 1 comprises the adapter 2.

The adapter 2 includes the tube holding section 5, the handling section 8, the reduction section 6, and the fibre holding section 7. The connecting section 9 in the embodiment of Fig. 5 is a separate, exchangeable, preferably tubular part, such as a bushing 20. It protrudes against in the direction pointing away from the distal end DE along the fibre direction.

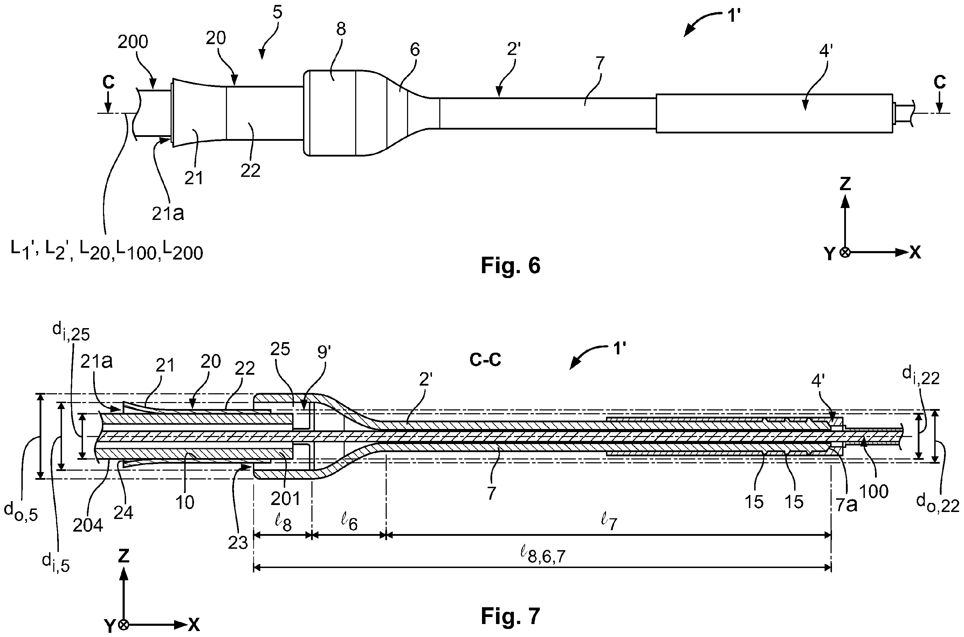

Fig. 6 shows the fibre fixation assembly 1 in a schematic side view. The bushing 20 comprises a tube receiving section 21 providing a tapered section 21a for inserting the tube into the bushing 20. An insertion section 22 of the bushing 20 opposite to the tapered section 21a is inserted into a receptacle 23 or the adapter 2.

Fig. 7 shows the fibre fixation assembly 1 in a schematic cross-sectional view along the cross-sectional line C-C depicted in Fig. 6. This cross-section is made along a longitudinal axis L₁, L₂, L₂₀, L₁₀₀, and L₂₀₀ of the fibre fixation assembly 1, the adapter 2, the bushing 20, the fibre or bundle of fibres 100, and the tube 200, respectively, which are arranged coaxially. A combined length Is, ₆, ₇ of the adapter 2 results from the length I₈ of the handling section 8, the length I₆ of the reduction section 6, and the length I₇ of the fibre holding section 7. In other words, the lengths Is, I₆, and I₇ sum up to the combined length I_{5,6,7}. A ratio r_{I8}, ₆, ₇/d_{o,5} between the combined length I_{8,6,7} and the outer diameter d_{o,5} may be between 6 and 8, for example.

Connecting elements 10 establish a fixation of the exchangeable connecting section 9 to the tube 200. The connecting elements may have the form of ribs and/or cutter knives that extend essentially along the longitudinal axis L₂₀ of the bushing 20 e.g. at an inner circumference 24. The bushing 20 is inserted into a part of the tube holding section 5, which opens along the fibre direction F facing away from the distal end DE.

At the receptacle 23, fixing elements 25 may be provided to engage the bushing 20 and, if necessary, a correspondingly sized tube 200. The connecting elements 10 may have the shape of bars and/or cutter knives which extend essentially along the longitudinal axis L₂₀ of the bushing 20. The fixing elements 25 provide that the connecting section 9 is in mesh with the remaining adapter 2 and both are mounted to each other by positive fit, force fit, and/or frictional fit.

At or close to the distal end DE, the fibre holding section 7 may be provided with fixing elements 15 e.g. in the form of ring-shaped ribs extending along an outer circumference of the fibre holding section. The fixing elements 15 enhance a tight fit of the sealing component 4 around the fibre holding section 7. The sealing component 4 may be , in this embodiment, a heat-shrinking tube or hose which snugly fits around the fibre holding section 7 and the fibre or bundle of fibres 100.

The tube holding section 5 of the adapter 2 has an inner diameter d_{i, 5}. The connecting elements 25 within the connecting section 9 provide that the connecting section 9 has an inner diameter d_{i, 25} at the connecting elements 25 and otherwise has an inner diameter which essentially equals the inner diameter d_{i, 5} of the tube holding section 5. The insertion section 22 of the bushing 20 has an outer diameter d_{o, 22} and an inner diameter d_{i, 22}. The connecting elements 10 add to the inner diameter d_{i, 22}, such that the bushing 20 narrows at the connection elements 10. The outer diameter d_{o, 22} of the bushing is larger than or at a maximum equal to the inner diameter d_{i, 25} or, alternatively, to the inner diameter d_{i, 5}.

The embodiment shown In Figs. 5 to 7 allows different connecting sections 9 to be used which are adapted to be connected to a variety of tubes. In order to be exchangeable, the insertion sections 22 of the various connecting sections are identical so that they all can be integrated into the adapter 2 or the receptacle 23, respectively.

In this way, the embodiment of Figs. 5 to 7 differs from the embodiment of Figs. 1 to 4c, where the whole adapter has to be exchanged, if tubes of various sizes have to be accommodated. Of course, the connecting section 9 of the embodiment shown in Fig. 1 may also be a separate, exchangeable part.

In both cases, however, the various adapters 2 and/or various connecting elements 9 together form a kit which provides identical outer dimensions at least at the fibre holding section, preferably also at the reduction section and the handling section. Thus, the adapter 2 may be handled with a single tool independently of the tube size.

The elements 10, 15, 25 may be provided in whatever number, form and shape which seems appropriate for securely mounting the tube 200, the connecting section 9 and/or the sealing component to each other as well as to the remaining adapter 2.

The sealing component 4 may be made of any kind of sealing material, such as mastic, resin, silica gel, or heat-shrinkable material for example, which is suitable for sealing up the adapter 2 and at the same time is sufficiently plastically deformable. The sealing component 4 may also be comprised of an outer heat-shrinkable tube, covered at the inside with a layer of hotmelt adhesive. A part of the sealing component 4 may already be installed (shrunk) on the fiber holding section 7. The fixing elements 15 helping to keep sealing component 4 in place when a first part is shrunk. The adapter 2 is thus delivered with the sealing component 4 already attached to it. Once the fiber or fiber bundle has been passed through the fiber holding section 7 and the sealing component 4, the other part of the sealing component 4 can be heated and shrunk to seal the fiber or fiber bundle. When the part of sealing component 4 that is being shrunk in the field, has the appropriate length, the heating can be done with the tool that is already used for the installation of heatshrinkable splice protectors, e.g the length being in the range of 20 mm to 30 mm.

The sealing 3 does not need to have a fixing or immobilizing function. Hence, the sealing may be rather soft such does not need a significant time for hardening.

In order to assemble the fibre fixation assembly 1, the following steps are taken: The adapter 2 is preferably mounted on the tube 200 before the fibre is moved through the adapter 2. For this, the adapter 2 and the tube are connected by the tube holding section 5 in one of the above-described embodiments. If the adapter 2 is provided with an exchangeable connecting section 9, the proper connecting section 9 designed for the particular tube 200 must be chosen first and mounted onto the tube end 201 or the remaining adapter 2. The connection between the tube and the adapter is complete once the tube 200 abuts the sealing element 3. The fibre or bundle of fibres 100 extending out of the tube 200 is inserted into the adapter 2 and moved through the adapter, so that it extends beyond the adapter 2 arranged between the free end of the fibre or bundle of fibres 100 and the tube. The fibre or bundle of fibres 100 may in particular be moved through the adapter 2 by a gas flow streaming through the tube 200 and the receptacle of the adapter 2 thereby moving and centring the fibre.

The sealing component 4 may be pre-mounted on the adapter 2 before the fibre or bundle of fibres 100 is threaded through the sealing component.

When the fibre has reached the desired position relative to the adapter, the sealing component is plastically deformed about the fibre and brought into contact with the fibre surface to establish a sealing connection between the fibre holding section 5 and the fibre or bundle of fibres 100 and to shield the receptacle of the adapter 2 against environmental contamination.

In the above-shown embodiments, the deformation may take place by deforming, e.g. crimping, the fibre holding element in a region in which the sealing component is applied. Additionally or alternatively, heat may be applied to plastically deform, in particular, shrink the sealing component and/or the fibre holding section.

Once the fibre or fibre bundle, the sealing component and the fibre holding section have been brought into sealing contact with one another, the installation of the adapter 2 is complete.

## Claims

1. Adapter (2) for fixing an optical fibre or bundle of optical fibres (100), with respect to an end section (201) of a tube (200) accommodating the fibre or fibre bundle (100), comprising:
a tube holding section (5) at a proximal end (PE) of the adapter (2), the tube holding section having a connecting section (9) adapted to fix the adapter (2) to the tube, the connecting section (9) comprising a tube-like protrusion or shape that extends in a direction pointing away from a distal end (DE) of the adapter (2),
a fibre holding section (7) providing a substantially tubular receptacle (204) for receiving the fibre or bundle of fibres (100), the receptacle (204) having a distal opening (205) at the distal end (DE) of the adapter (2), a plastically deformable sealing component (4) for fixing the fibre or bundle of fibres (100) to the adapter (2), the distal end (DE) of the fibre holding section (7) being received within the sealing component (4), and
a sealing element (3) provided at the proximal end (PE), sealingly abutting the end section (201) and seated between the end section (201) of the tube and the remaining adapter (2), the sealing element enclosing the connecting section (9) and being adapted to seal up a gap between the tube (200) and the adapter (2).

2. Adapter (2) according to claim 1, wherein the fibre holding section (7) is adapted to be at least partially, plastically deformed about the fibre or bundle of fibres (100).

3. Adapter (2) according to claim 1 or 2, wherein the sealing component (4) comprises heat-shrinkable tubing.

4. Adapter (2) according to any one of claims 1 to 3, wherein the sealing component (4) comprises a glue material.

5. Adapter (2) according to any one of claims 1 to 4, wherein the fibre holding section (7) comprises at least one fixing element (15) facing the sealing component (4) and adapted to be positively locked to the sealing component.

6. Adapter (2) according to any one of claims 1 to 5, wherein a diameter (dO,7) of a part of the fibre holding section (7), the part being engaged by the sealing component (4), does not exceed five times a diameter of the fibre or bundle of fibres (100).

7. Adapter (2) according to any one of claims 1 to 6, wherein a length, over which the sealing component (4) is adapted to be engaged to the fibre or bundle of fibres (100) is at least 10 times a diameter (d100) of the fibre or bundle of fibres (100).

8. Adapter (2) according to any one of claims 1 to 7, wherein the connecting section (9) is provided with a connecting element (10), the connecting element (10) being adapted to mesh with a wall (203) of the tube (200).

9. Adapter (2) according to any one of claims 1 to 8, wherein the tube holding section (5) has an outer diameter (do,9) which exceeds an inner diameter (di,200) of the tube (200).

10. Adapter (2) according to any one of claims 1 to 9, wherein a reduction section (6) is arranged between the tube holding section (5) and the fibre holding section (7), the reduction section (6) having an outer shape that tapers towards the fibre holding section (7).

11. Adapter (2) according to any one of claims 1-10, wherein the sealing element (3) is a ring made of elastic material.

12. Adapter (2) according to any one of claims 1-11, wherein an outer diameter (d_{o, 200}) of the tube (200) is smaller than an outer diameter (d_{O,3}) of the sealing element (3).

13. Adapter (2) according to claim 10, wherein a shaft portion (12) of the fibre holding section (7) abuts the reduction section (6) and has increased wall thickness surrounding the sealing component (4) as compared to the remaining fibre holding section (7).

14. Adapter (2) according to any one of claims 1-13, wherein the sealing component (4) comprises a sticky component, the sticky component being activated by plastic deformation.

15. Method for fixing an optical fibre or bundle of fibres (100) extending in a fibre direction (F) with respect to an end section (201) of a tube (200) accommodating the fibre or bundle of fibres (100), the method including the steps of:
fixing an adapter (2) to the end section (201), the adapter including a connecting section (9) comprising a tube-like protrusion or shape that extends in a direction pointing away from a distal end (DE) of the adapter (2), such that a sealing element (3) is provided at a proximal end (PE) of the adapter 200 and sealingly abuts the end section (201), the sealing element (3) being seated between the end section (201) of the tube and the remaining adapter (2), the sealing element enclosing the connecting section (9) and being adapted to seal up a gap between the tube (200) and the adapter (2),
inserting a fibre or bundle of optical fibres (100) through the adapter (2),
inserting the fibre or bundle of optical fibres (100) through a plastically deformable sealing component (4),
bringing the sealing component (4) into sealing and holding engagement with the adapter (2), and
plastically deforming the sealing component (4) about the fibre or bundle of optical fibres (100) to bring the sealing component (4) into sealing and holding engagement with the fibre or bundle of fibres (100).

## Patentansprüche

1. Adapter (2) zum Befestigen einer Glasfaser oder eines Bündels von Glasfasern (100) in Bezug auf einen Endabschnitt (201) eines Rohres (200), das die Faser oder das Faserbündel (100) aufnimmt, umfassend:
einen Rohrhalteabschnitt (5) an einem proximalen Ende (PE) des Adapters (2), wobei der Rohrhalteabschnitt einen Verbindungsabschnitt (9) aufweist, der dazu eingerichtet ist, den Adapter (2) an dem Rohr zu befestigen, wobei der Verbindungsabschnitt (9) einen rohrartigen Vorsprung oder eine rohrartige Form aufweist, die sich in einer Richtung erstreckt, die von einem distalen Ende (DE) des Adapters (2) weg zeigt,
einen Faserhalteabschnitt (7), der eine im Wesentlichen rohrförmige Aufnahme (204) zum Aufnehmen der Faser oder des Faserbündels (100) bereitstellt, wobei die Aufnahme (204) eine distale Öffnung (205) an dem distalen Ende (DE) des Adapters (2) aufweist, eine plastisch verformbare Dichtungskomponente (4) zum Befestigen der Faser oder des Faserbündels (100) an dem Adapter (2), wobei das distale Ende (DE) des Faserhalteabschnitts (7) innerhalb der Dichtungskomponente (4) aufgenommen ist, und
ein an dem proximalen Ende (PE) vorgesehenes Dichtungselement (3), das abdichtend an dem Endabschnitt (201) anliegt und zwischen dem Endabschnitt (201) des Rohres und dem verbleibenden Adapter (2) sitzt, wobei das Dichtungselement den Verbindungsabschnitt (9) umschließt und dazu eingerichtet ist, einen Spalt zwischen dem Rohr (200) und dem Adapter (2) abzudichten.

2. Adapter (2) nach Anspruch 1, wobei der Faserhalteabschnitt (7) zumindest teilweise um die Faser oder das Faserbündel (100) plastisch verformbar ist.

3. Adapter (2) nach Anspruch 1 oder 2, wobei die Dichtungskomponente (4) einen Schrumpfschlauch umfasst.

4. Adapter (2) nach einem der Ansprüche 1 bis 3, wobei die Dichtungskomponente (4) ein Klebstoffmaterial umfasst.

5. Adapter (2) nach einem der Ansprüche 1 bis 4, wobei der Faserhalteabschnitt (7) mindestens ein der Dichtungskomponente (4) zugewandtes Befestigungselement (15) umfasst, das dazu eingerichtet ist, formschlüssig mit der Dichtungskomponente verriegelt zu werden.

6. Adapter (2) nach einem der Ansprüche 1 bis 5, wobei ein Durchmesser (dO, 7) eines Teils des Faserhalteabschnitts (7), der mit der Dichtungskomponente (4) in Eingriff steht, das Fünffache eines Durchmessers der Faser oder des Faserbündels (100) nicht überschreitet.

7. Adapter (2) nach einem der Ansprüche 1 bis 6, wobei eine Länge, über welche die Dichtungskomponente (4) mit der Faser oder dem Faserbündel (100) in Eingriff gebracht werden kann, mindestens das Zehnfache eines Durchmessers (d100) der Faser oder des Faserbündels (100) beträgt.

8. Adapter (2) nach einem der Ansprüche 1 bis 7, wobei der Verbindungsabschnitt (9) mit einem Verbindungselement (10) versehen ist, wobei das Verbindungselement (10) dazu eingerichtet ist, mit einer Wand (203) des Rohres (200) in Eingriff gebracht zu werden.

9. Adapter (2) nach einem der Ansprüche 1 bis 8, wobei der Rohrhalteabschnitt (5) einen Außendurchmesser (do, 9) aufweist, der einen Innendurchmesser (di, 200) des Rohres (200) übersteigt.

10. Adapter (2) nach einem der Ansprüche 1 bis 9, wobei zwischen dem Rohrhalteabschnitt (5) und dem Faserhalteabschnitt (7) ein Reduzierabschnitt (6) angeordnet ist, wobei der Reduzierabschnitt (6) eine sich zu dem Faserhalteabschnitt (7) hin verjüngende Außenform aufweist.

11. Adapter (2) nach einem der Ansprüche 1 bis 10, wobei das Dichtungselement (3) ein Ring aus einem elastischen Material ist.

12. Adapter (2) nach einem der Ansprüche 1 bis 11, wobei ein Außendurchmesser (d_{O, 200}) des Rohres (200) kleiner ist als ein Außendurchmesser (d_{O, 3}) des Dichtungselements (3).

13. Adapter (2) nach Anspruch 10, wobei ein Schaftabschnitt (12) des Faserhalteabschnitts (7) an dem Reduzierabschnitt (6) anliegt und eine gegenüber dem übrigen Faserhalteabschnitt (7) erhöhte Wandstärke um die Dichtungskomponente herum (4) aufweist.

14. Adapter (2) nach einem der Ansprüche 1-13, wobei die Dichtungskomponente (4) eine klebrige Komponente umfasst, wobei die klebrige Komponente durch plastische Verformung aktiviert wird.

15. Verfahren zum Befestigen einer Glasfaser oder eines Faserbündels (100), das sich in einer Faserrichtung (F) in Bezug auf einen Endabschnitt (201) eines Rohres (200) erstreckt, das die Faser oder das Faserbündel (100) aufnimmt, wobei das Verfahren die folgenden Schritte beinhaltet:
Befestigen eines Adapters (2) an dem Endabschnitt (201), wobei der Adapter einen Verbindungsabschnitt (9) enthält, der einen rohrartigen Vorsprung oder eine rohrartige Form umfasst, die sich in einer Richtung erstreckt, welche von einem distalen Ende (DE) des Adapters (2) weg zeigt, so dass ein Dichtungselement (3) an einem proximalen Ende (PE) des Adapters (200) vorgesehen ist und dichtend an dem Endabschnitt (201) anliegt, wobei das Dichtungselement (3) zwischen dem Endabschnitt (201) des Rohres und dem verbleibenden Adapter (2) sitzt, wobei das Dichtungselement den Verbindungsabschnitt (9) umschließt und dazu eingerichtet ist, einen Spalt zwischen dem Rohr (200) und dem Adapter (2) zu abzudichten,
Einführen einer Faser oder eines Bündels von Glasfasern (100) durch den Adapter (2),
Einführen der Faser oder des Bündels von Glasfasern (100) durch eine plastisch verformbare Dichtungskomponente (4),
Bringen der Dichtungskomponente (4) in dichtenden und haltenden Eingriff mit dem Adapter (2), und
plastisches Verformen der Dichtungskomponente (4) um die Faser oder das Bündel von Glasfasern (100) herum, um die Dichtungskomponente (4) in dichtenden und haltenden Eingriff mit der Faser oder dem Faserbündel (100) zu bringen.

## Revendications

1. Adaptateur (2) pour fixer une fibre optique ou un faisceau de fibres optiques (100), par rapport à une section d'extrémité (201) d'un tube (200) recevant la fibre ou le faisceau de fibres (100), comprenant :
une section de maintien de tube (5) à une extrémité proximale (PE) de l'adaptateur (2), la section de maintien de tube ayant une section de connexion (9) conçue pour fixer l'adaptateur (2) au tube, la section de connexion (9) comprenant une saillie ou une forme de type tube qui s'étend dans une direction pointant vers l'extérieur d'une extrémité distale (DE) de l'adaptateur (2),
une section de maintien de fibres (7) fournissant un réceptacle sensiblement tubulaire (204) pour recevoir la fibre ou le faisceau de fibres (100), le réceptacle (204) ayant une ouverture distale (205) à l'extrémité distale (DE) de l'adaptateur (2), un composant d'étanchéité plastiquement déformable (4) pour fixer la fibre ou le faisceau de fibres (100) à l'adaptateur (2), l'extrémité distale (DE) de la section de maintien de fibres (7) étant reçue dans le composant d'étanchéité (4), et
un élément d'étanchéité (3) prévu à l'extrémité proximale (PE), venant en butée de manière étanche contre la section d'extrémité (201) et placé entre la section d'extrémité (201) du tube et l'adaptateur restant (2), l'élément d'étanchéité enfermant la section de connexion (9) et étant conçu pour obturer un espace entre le tube (200) et l'adaptateur (2).

2. Adaptateur (2) selon la revendication 1, dans lequel la section de maintien de fibres (7) est conçue pour se déformer au moins partiellement, plastiquement autour de la fibre ou du faisceau de fibres (100).

3. Adaptateur (2) selon les revendications 1 ou 2, dans lequel le composant d'étanchéité (4) comprend une gaine thermorétractable.

4. Adaptateur (2) selon l'une quelconque des revendications 1 à 3, dans lequel le composant d'étanchéité (4) comprend un matériau de type colle.

5. Adaptateur (2) selon l'une quelconque des revendications 1 à 4, dans lequel la section de maintien des fibres (7) comprend au moins un élément de fixation (15) tourné vers le composant d'étanchéité (4) et conçu pour être verrouillé positivement sur le composant d'étanchéité.

6. Adaptateur (2) selon l'une quelconque des revendications 1 à 5, dans lequel un diamètre (dO,7) d'une partie de la section de maintien de fibres (7), la partie étant engagée par le composant de scellement (4), ne dépasse pas cinq fois un diamètre de la fibre ou du faisceau de fibres (100).

7. Adaptateur (2) selon l'une quelconque des revendications 1 à 6, dans lequel une longueur, sur laquelle le composant d'étanchéité (4) est conçu pour être engagé sur la fibre ou le faisceau de fibres (100) est au moins 10 fois un diamètre (d100) de la fibre ou du faisceau de fibres (100).

8. Adaptateur (2) selon l'une quelconque des revendications 1 à 7, dans lequel la section de connexion (9) est pourvue d'un élément de connexion (10), l'élément de connexion (10) étant conçu pour s'engrener avec une paroi (203) du tube (200).

9. Adaptateur (2) selon l'une quelconque des revendications 1 à 8, dans lequel la section de maintien de tube (5) a un diamètre extérieur (do,9) qui dépasse un diamètre intérieur (di,200) du tube (200).

10. Adaptateur (2) selon l'une quelconque des revendications 1 à 9, dans lequel une section de réduction (6) est disposée entre la section de maintien de tube (5) et la section de maintien de fibre (7), la section de réduction (6) ayant une forme extérieure qui se rétrécit vers la section de maintien de fibre (7).

11. Adaptateur (2) selon l'une quelconque des revendications 1 à 10, dans lequel l'élément d'étanchéité (3) est un anneau en matériau élastique.

12. Adaptateur (2) selon l'une quelconque des revendications 1 à 11, dans lequel un diamètre extérieur (do, 200) du tube (200) est inférieur à un diamètre extérieur (do, 3) de l'élément d'étanchéité (3).

13. Adaptateur (2) selon la revendication 10, dans lequel une partie d'arbre (12) de la section de maintien de fibre (7) bute contre la section de réduction (6) et a une épaisseur de paroi accrue entourant le composant d'étanchéité (4) par rapport au reste de la section de maintien de fibre (7).

14. Adaptateur (2) selon l'une quelconque des revendications 1 à 13, dans lequel le composant d'étanchéité (4) comprend un composant collant, le composant collant étant activé par déformation plastique.

15. Procédé de fixation d'une fibre optique ou d'un faisceau de fibres (100) s'étendant dans une direction de fibre (F) par rapport à une section d'extrémité (201) d'un tube (200) recevant la fibre ou le faisceau de fibres (100), le procédé comprenant les étapes consistant à :
fixer un adaptateur (2) à la section d'extrémité (201), l'adaptateur comprenant une section de connexion (9) comprenant une saillie ou une forme de type tube qui s'étend dans une direction pointant à l'opposé d'une extrémité distale (DE) de l'adaptateur (2), de sorte qu'un élément d'étanchéité (3) est prévu à une extrémité proximale (PE) de l'adaptateur 200 et bute de manière étanche contre la section d'extrémité (201), l'élément d'étanchéité (3) étant placé entre la section d'extrémité (201) du tube et le reste de l'adaptateur (2), l'élément d'étanchéité entourant la section de connexion (9) et étant conçu pour sceller un espace entre le tube (200) et l'adaptateur (2), insérer une fibre ou un faisceau de fibres optiques (100) à travers l'adaptateur (2),
insérer la fibre ou le faisceau de fibres optiques (100) à travers un composant de scellement plastiquement déformable (4),
amener le composant d'étanchéité (4) en engagement d'étanchéité et de maintien avec l'adaptateur (2), et
déformer plastiquement le composant d'étanchéité (4) autour de la fibre ou du faisceau de fibres optiques (100) pour amener le composant d'étanchéité (4) en engagement d'étanchéité et de maintien avec la fibre ou le faisceau de fibres (100).
